# EUROPEAN PATENT APPLICATION

(11) **EP 3 179 651 A1**
(43) Date of publication of application: **14.06.2017**
(21) Application number: 17153021.5
(22) Date of filing: 18.06.2013
(51) Int. Cl.: H04J 99/00, H04B 7/04, H04J 11/00, H04W 16/28, H04B 7/06, H01Q 1/24, H01Q 3/26, H01Q 21/24, H04B 7/0452, H04L 5/00, H04L 27/26, H04B 7/10

(54) **BASE STATION APPARATUS, USER TERMINAL, COMMUNICATION SYSTEM AND COMMUNICATION CONTROL METHOD**

(30) Priority: 30.07.2012 JP 2012168661
(62) Divisional of application: 13824755.6
(71) Applicant: NTT DoCoMo, Inc., Tokyo 100-6150 (JP)
(72) Inventor: Nagata, Satoshi, Tokyo, 100-6150 (JP); Kishiyama, Yoshihisa, Tokyo, 100-6150 (JP)
(74) Representative: Hoffmann Eitle

(57) **Abstract**

The present invention is designed to provide a base station apparatus, a user terminal, a communication system and a communication control method that can support the diversification of communication. In a base station apparatus (200), downlink measurement object signals are pre-coded in a precoding multiplication section (204) using precoding weights for downlink measurement object signals, and transmitted to a user terminal, and, in the user terminal, the downlink measurement object signals are demodulated using the precoding weights, and measurement processes are performed based on the demodulated downlink measurement object signals.

## Description

### Technical Field

The present invention relates to a base station apparatus, a user terminal, a communication system and a communication control method in a next-generation mobile communication system.

### Background Art

In a UMTS (Universal Mobile Telecommunications System) network, long-term evolution (LTE) is under study for the purposes of further increasing high-speed data rates, providing low delay and so on (non-patent literature 1). In LTE, as multiple access schemes, a scheme that is based on OFDMA (Orthogonal Frequency Division Multiple Access) is used in downlink channels (downlink), and a scheme that is based on SC-FDMA (Single Carrier Frequency Division Multiple Access) is used in uplink channels (uplink).

In LTE, MIMO (Multi Input Multi Output), which achieves improved data rates (spectral efficiency) by transmitting and receiving data using a plurality of antennas, is defined. According to MIMO, a plurality of transmitting/receiving antennas are provided in the transmitter/receiver, so that different transmission information sequences are transmitted from different transmitting antennas at the same time. Meanwhile, on the receiving side, taking advantage of the fact that fading variation is produced differently between the transmitting/receiving antennas, information sequences that have been transmitted at the same time are separated and detected.

As MIMO transmission schemes, single-user MIMO (SU-MIMO), in which transmission information sequences for the same user are transmitted at the same time from different transmitting antennas, and multi-user MIMO (MU-MIMO), in which transmission information sequences for different users are transmitted at the same time from different transmitting antennas have been proposed. In SU-MIMO and MU-MIMO, optimal PMIs (Precoding Matrix Indicators) corresponding to the amount of phase and amplitude control (precoding weights) to be set in the antennas are selected from codebooks, and fed back to the transmitter as channel information (CSI: Channel State Information). On the transmitter side, each transmitting antenna is controlled based on the PMIs fed back from the receiver, and transmission information sequences are transmitted.

### Citation List

### Non-Patent Literature

Non-Patent Literature 1: 3GPP TR 25.913 "Requirements for Evolved UTRA and Evolved UTRAN"

### Summary of Invention

### Technical Problem

Also, successor systems of LTE (referred to as, for example, "LTE-advanced" or "LTE enhancement" (hereinafter referred to as "LTE-A")) are under study for the purpose of achieving further broadbandization and increased speed beyond LTE. In such an LTE-A system, a study is in progress to adopt beam forming to give vertical directivity to beams transmitted from a base station apparatus, and MIMO to use this (3D MIMO/beam forming) for the purposes of further increasing data rates (spectral efficiency). Furthermore, a study is in progress to adopt beam forming to generate a large volume of beams from antenna elements that are designed on a reduced scale in a high frequency band, and MIMO to use this (massive-antenna MIMO/beam forming).

To optimize the true performance of systems where such new communication schemes are applied, it is necessary to transmit downlink measurement object signals including synchronization signals, broadcast signals and so on adequately. However, given the configurations at present, cases might occur where synchronization cannot be properly established on a user equipment UE side, and therefore it is not possible to optimize the true performance of the systems.

The present invention has been made in view of the above, and it is therefore an object of the present invention to provide a base station apparatus, a user terminal, a communication system and a communication control method that can support the diversification of communication.

### Solution to Problem

The communication system of the present invention provides a base station apparatus including a mapping processing section configured to map downlink measurement object signals to a frequency band that is different from a frequency band that is used to transmit downlink shared channel data, and a transmission section configured to transmit the downlink measurement object signals in the frequency band where the downlink measurement object signals are mapped in the mapping processing section, and, a user terminal including a receiving section configured to receive downlink measurement object signals in a frequency band that is different from a frequency band that is used to transmit downlink shared channel data, and a measurement section configured to perform measurement processes based on the downlink measurement object signals received in the receiving section.

### Advantageous Effects of Invention

According to the present invention, it is possible to provide a base station apparatus, a user terminal, a communication system and a communication control method that can support the diversification of communication.

### Brief Description of Drawings

FIG. 1 is a diagram to explain communication schemes (3D MIMO/beam forming) which may be applied to an LTE-A system;
FIG. 2 is a diagram to explain communication schemes (massive-antenna MIMO/beam forming) which may be applied to an LTE-A system;
FIG. 3 provides conceptual diagrams of an array antenna of a base station apparatus in which 3D MIMO/beam forming are adopted;
FIG. 4 is a diagram to show the relationship between the antenna element groups of an array antenna and precoding weights;
FIG. 5 is a conceptual diagram of vertical sectorization beams formed by an array antenna;
FIG. 6 is a diagram to show an example of a network configuration where a communication system according to the present invention is adopted;
FIG. 7 is a diagram to explain a system configuration of a communication system according to the present embodiment;
FIG. 8 is a block diagram to show a configuration of a base station apparatus according to the present embodiment; and
FIG. 9 is a block diagram to show a configuration of a mobile station apparatus according to the present embodiment.

### Description of Embodiments

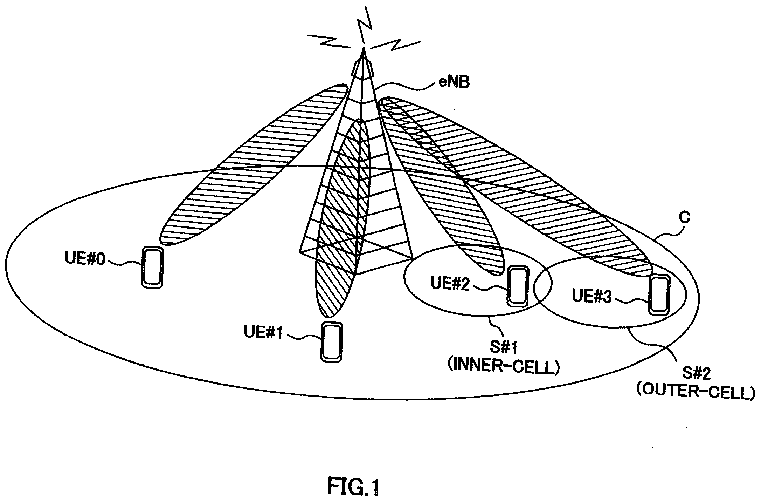

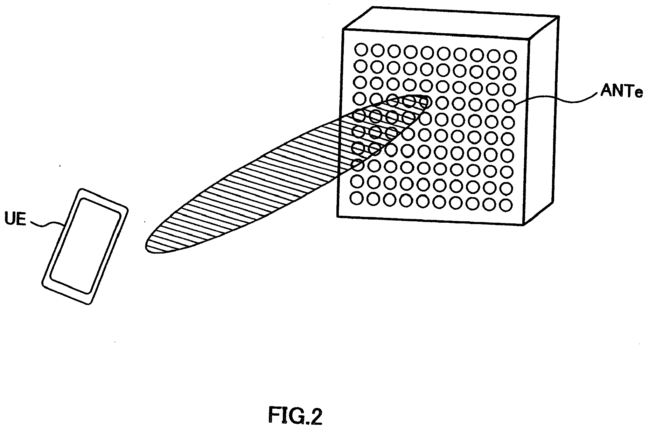

Now, an embodiment of the present invention will be described below in detail with reference to the accompanying drawings. First, communication schemes that may be applied to an LTE-A system, which adopts the communication system of the present invention, will be described below. In FIG. 1, beam forming to give vertical directivity to beams transmitted from a base station apparatus eNB, and MIMO to use this (these may be referred to as, for example, "3D MIMO/beam forming" and so on) are shown. In FIG. 2, beam forming to generate a large volume of beams from antenna elements that are designed on a reduced scale in a high frequency band, and MIMO to use this (these may be referred to as, for example, "massive-antenna MIMO/beam forming" and so on) are shown.

As shown in FIG. 1, in a communication system where 3D MIMO/beam forming are adopted, beams having horizontal directivity are output to user terminals UE #0 and UE #1 from the antenna of the base station apparatus eNB. Meanwhile, beams having directivity not only in horizontal directions but also in vertical directions as well are output to user terminals UE #2 and UE #3. In this way, by outputting beams with varying tilt angles from the antenna of the base station apparatus eNB, the space in cell C is divided into a plurality of sectors (in FIG. 1, into sectors S #1 and S #2). These sectors S #1 and S #2 may be referred to as the "inner cell" and the "outer cell," respectively. Note that the details of the antenna configuration of the base station apparatus eNB adopting 3D MIMO/beam forming will be described later.

As shown in FIG. 2, in a communication system where massive-antenna MIMO/beam forming are adopted, a large volume of beams are generated from antenna elements that are designed on a reduced scale in a high frequency band. In this massive-antenna MIMO/beam forming, beams to match the number of antenna elements can be generated at a maximum, by changing the transmission weight on a per antenna element basis. In massive-antenna MIMO/beam forming, the decrease of antenna gain in each antenna element is compensated for by a large volume of beam forming gain.

Now, the antenna configuration of the base station apparatus eNB where 3D MIMO/beam forming are adopted, shown in FIG. 1, will be described below. Here, in particular, an antenna configuration to realize beam forming that gives vertical directivity to beams will be described. This radio base station apparatus eNB has an array antenna formed with a plurality of antenna elements, which are divided into at least one group in association with N communication types, where N is an integer of 2 or greater. First, a plurality of communication types which this array antenna provides will be described.

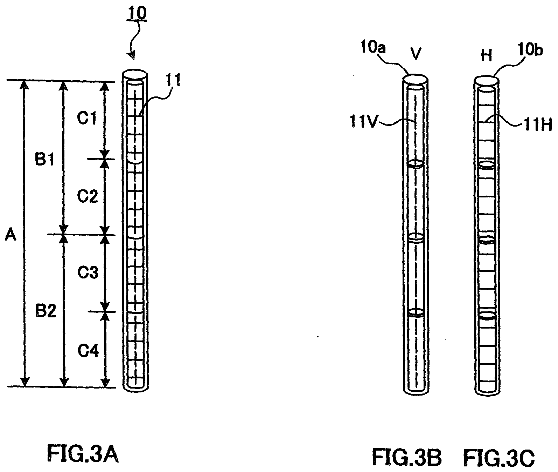

FIG. 3A is a conceptual diagram of the array antenna provided in the base station apparatus eNB adopting 3D MIMO/beam forming. As shown in FIG. 3A, an array antenna 10 is formed with a plurality of antenna elements 11 that are aligned in a line along one direction. FIG. 3A shows an example with sixteen antenna elements 11. For example, the array antenna 10 is formed with a polarization antenna pairing a vertical polarization antenna 10a and a horizontal polarization antenna 10b. FIG. 3B is a conceptual diagram showing the vertical polarization antenna 10a alone, and FIG. 3C is a conceptual diagram showing the horizontal polarization antenna 10b alone. When the polarization antennas are adopted, the individual antenna elements 11 are formed with sets of vertical polarization elements 11V and horizontal polarization elements 11H, respectively. Although a case will be described with the following description where the array antenna 10 of the radio base station is erected vertically, it is equally possible to arrange the array antenna 10 diagonally (or horizontally), depending on the environment.

A first communication type is a type to form one group A with all of the antenna elements 11 constituting the array antenna 10, so that one antenna branch is constituted with the whole antenna. A second communication type is a type to form two groups B1 and B2 that divide the array antenna 10 into two vertically, so that two antenna branches are constituted with the whole antenna. A third communication type is a type to form four groups C1, C2, C3 and C4 that divide the array antenna 10 into four vertically, so that four antenna branches are constituted. Here, although the first to third communication types will be shown as examples, it is equally possible to set an arbitrary number of communication types, depending on the number in which the antenna elements 11 constituting the array antenna 10 is divided along the vertical direction. Also, the maximum number of branches can be selected adequately depending on the antenna elements 11.

Among the first to third communication types, the length of antennas to constitute one branch the longest (the number of antenna elements is the largest) in the first communication type. The antenna length per branch becomes shorter (the number of antenna elements becomes smaller) as the number of antenna branches increases. Generally speaking, when beams are formed using an array antenna, it is possible to improve the antenna gain and also make the beam width smaller as the number of antenna elements per branch increases. Consequently, according to the first communication type, the whole antenna is formed with one antenna branch, so that the antenna gain is maximized, and it becomes possible to shape sharp beams that are pointed to cell edges. With the second communication type, the number of antenna elements per branch is half, so that, compared to the first communication type, the antenna gain decreases, and furthermore the beam width increases. With the third communication type, the number of antenna elements per branch becomes half again from the second communication type, so that, compared to the second communication type, the antenna gain decreases, and furthermore the beam width increases.

In a communication system where 3D MIMO/beam forming are applied, it is possible to switch the branch configuration of the array antenna 10 by means of precoding weights (hereinafter referred to simply as "weights"). Here, the mechanism of switching the branch configuration of the array antenna 10 by means of weights will be described.

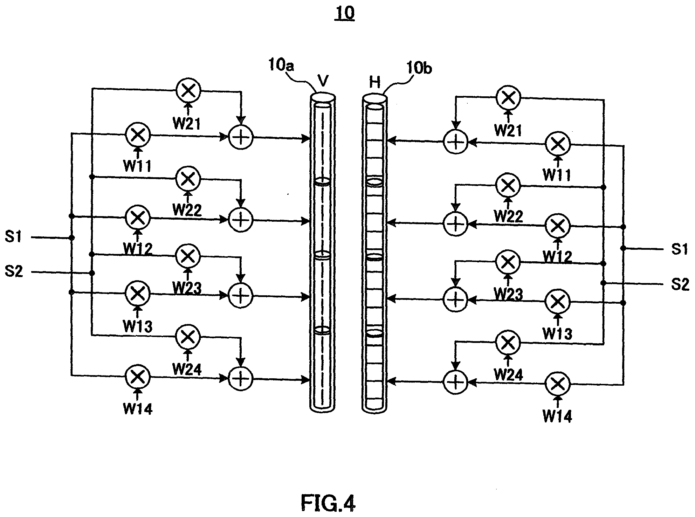

In the array antenna 10, transmission signals that are multiplied by weights on a per group basis are input in the antenna elements 11. By controlling the weights, arbitrary antenna branches can be formed with the array antenna 10. As shown in FIG. 4, the sixteen antenna elements 11 forming the array antenna 10 constitute the minimum antenna branch unit (the number of antenna elements = 4), and transmission signals multiplied by the same weight are supplied. Although a configuration which can combine two transmission signals S1 and S2 is shown in FIG. 2, the maximum number that can be combined is not limited to this. For example, when providing eight-antenna port transmission, a configuration which can combine four transmission signals S1 to S4 is preferable. Note that transmission signals S1 to S4 may be the same signal, and the branch configuration to be set in the array antenna 10 changes with the content of weights by which the transmission signals are multiplied

With the first communication type, transmission signal S1, multiplied by the same weight W (for example, W11, W12, W13, W14 = 1, 1, 1, 1), is input in all the antenna elements 11 constituting one group A. By this means, it is possible to form one beam which achieves maximal antenna gain and which has a minimal beam width. The vertical polarization antenna 10a and the horizontal polarization antenna 10b each form one beam, so that two beams are formed with the antenna apparatus (array antenna 10). Consequently, the first communication type can provide two-antenna port transmission. If a user terminal UE supports 2x2 MIMO transmission, 2×2 MIMO transmission can be realized. Also, if a user terminal is configured for one-antenna transmission, two-antenna transmission and one-antenna reception can be realized, and space-frequency transmission diversity by means of SFBC (Space-Frequency Block Coding) can be realized.

In the second communication type, transmission signal S1, which makes group B1 alone an active branch, is multiplied by weights (W11, W12, W13 and W14) = (1, 1, 0, 0), and transmission signal S2, which makes group B2 alone an active branch, is multiplied by weights (W11, W12, W13, W14) = (0, 0, 1, 1). As a result of this, in the antenna elements 11 of the array antenna 10, transmission signal S1, which is multiplied by weights (W11, W12) = (1, 1) to make the antenna elements 11 constituting group B1 active, and which is multiplied by weights (W13, W14) = (0, 0) to make the antenna elements 11 constituting group B2 inactive, is input. At the same time, transmission signal S2, which is multiplied by weights (W11, W12) = (0, 0) to make the antenna elements 11 constituting group B1 inactive, and which is multiplied by weights (W13, W14) = (1, 1) to make the antenna elements 11 constituting group B2 active, is input. By this means, it is possible to shape beam 1 and beam 2 with two antenna branches corresponding to groups B1 and B2. The vertical polarization antenna 10a shapes beam 1 and beam 2, and, at the same time, the horizontal polarization antenna 10b shapes beam 1 and beam 2, so that the array antenna 10 is able to shape a total of four beams in parallel. By pointing these four beams formed in parallel toward the same area in cell C, four-antenna port transmission is provided. If a user terminal supports 4×4 MIMO transmission, 4×4 MIMO transmission can be realized.

According to the third communication type, the array antenna 10 can form four beams by changing weight W per branch constituting groups C1, C2, C3 and C4. The vertical polarization antenna 10a shapes four beams, and, at the same time, the horizontal polarization antenna 10b shapes four beams, so that the array antenna 10 is able to shape a total of eight beams in parallel. By directing the eight beams formed in parallel toward the same area in a cell, eight-antenna port transmission is provided.

Next, the method of generating vertical sectorization beams provided by the base station apparatus eNB adopting 3D MIMO/beam forming will be described. Note that the division of space into a plurality of sectors by means of a plurality of beams (or beam groups) with varying tilt angles will be hereinafter referred to as "vertical sectorization," for ease of description.

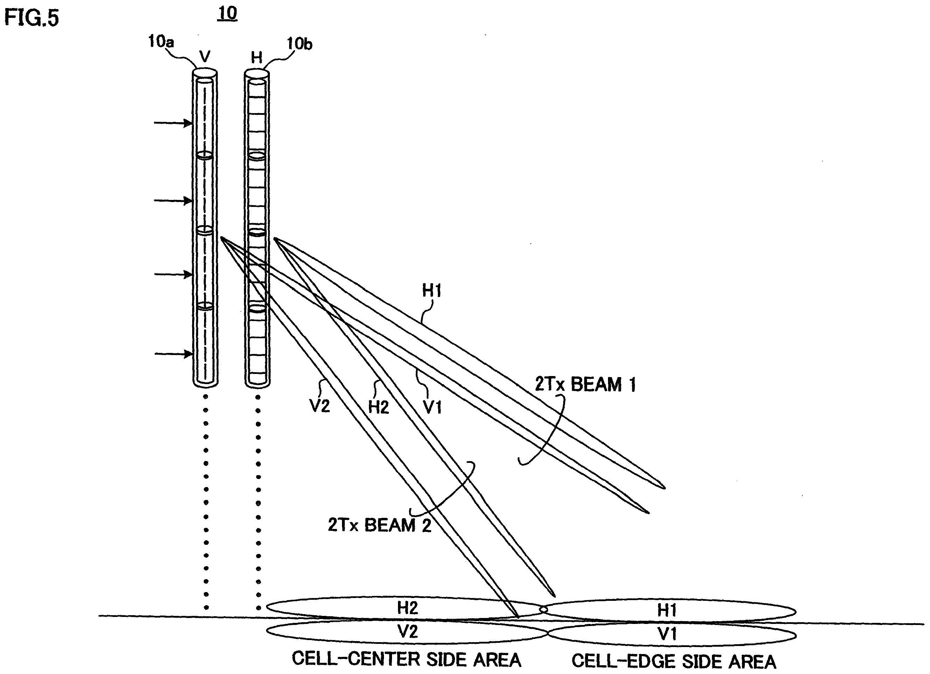

FIG. 5 is a conceptual diagram of vertical sectorization beams formed by the array antenna 10 of the base station apparatus eNB where 3D MIMO/beam forming is adopted. Here, if the array antenna 10 is placed to extend vertically, it is possible to sectorize space along the vertical direction. Nevertheless, sectorization along the vertical direction is not necessarily possible depending on the angle of the array antenna 10.

Beams are formed by multiplying transmission signal S1, which is input in all the antenna elements 11 constituting one group A on the array antenna 10 by the same weight W (W11, W12, W13, W14 = 1, 1, 1, 1). By this means, the vertical polarization antenna 10a forms beam V1 in association with transmission signal S1, and the horizontal polarization antenna 10b forms beam H1 in association with transmission signal S1. Since the array antenna 10 constitutes one antenna branch as a whole, it is possible to form beams V1 and H1 which achieve maximal antenna gain and which have a minimal beam width, like the beams formed in communication type 1 described earlier. For example, the base station apparatus eNB transmits beams V1 and H1 to cell edges. Two-antenna port transmission is provided by beam group G1, in which beams V1 and H1 that are pointed toward cell edges and that have the same tilt angle are combined.

Meanwhile, beams are formed by multiplying transmission signal S2, which is input in each antenna element 11 constituting one group A on the array antenna 10, by weights W (W11, W12, W13, W14 = 1, exp(ja), exp(2ja), exp(3ja)) that give phase differences of equal intervals between neighboring branches. Here, the symbol "a" represents the phase difference, and "j" represents the complex conjugate. The tilt angle of beams V1 and H1 changes depending on the phase difference "a" between neighboring branches. The tilt angle increases in proportion to the increase of the phase difference "a" between neighboring branches. The vertical polarization antenna 10a forms beam V2 in association with transmission signal S2, and the horizontal polarization antenna 10b forms beam H2 in association with transmission signal S2. For example, the base station apparatus eNB sets the tilt angle so that beams V2 and H2 are transmitted to the center of the cell. Two-antenna port transmission is provided by beam group G2, in which beams V2 and H2 that are pointed to the center of the cell and that have the same tilt angle are combined. By setting the tilt angle (phase difference a) of beams V2 and H2 at a large value, beam group G2 is set to a tilt angle pointed toward a location closer to the center of the cell.

Consequently, in the communication system where 3D MIMO/beam forming are adopted, the base station apparatus eNB can form beam group G1 pointed toward cell edges (two-antenna port transmission) and beam group G2 pointed toward the center of the cell (two-antenna port transmission) in parallel. In other words, the array antenna 10 can sectorize the cell space into multiple divisions along the vertical direction, and, by making the tilt angles of beam group G1 and beam group G2 different, form beam group G1 or G2 pointed to each vertical sector. Note that, if it is necessary to cope with a case where space is not sectorized along the vertical direction, it is equally possible to point one beam group toward a first area and point the other beam group toward a second area.

Note that the antenna configuration of the base station apparatus eNB adopting massive-antenna MIMO/beam forming, shown in FIG. 2, is the same configuration as the antenna configuration of the base station apparatus eNB adopting 3D MIMO/beam forming, except that the number of antenna elements is significantly greater. In the base station apparatus eNB where massive-antenna MIMO/beam forming are applied, weights are selected per user terminal UE to be the target of communication, and transmission signals are multiplied by selected weights and transmitted on the downlink.

In a communication environment where new communication schemes such as 3D MIMO/beam forming and massive-antenna MIMO/beam forming are applied, the amount of signaling from a base station apparatus eNB to user terminals UE may increase significantly. The present inventors have focused on the technical problem as to how to adequately transmit downlink measurement object signals, including synchronization signals, broadcast signals and so on, in a communication environment in which these new communication schemes are applied and in which the amount of signaling from a base station apparatus eNB to user terminals UE increases significantly.

That is, a gist of the present invention is to apply precoding to downlink measurement object signals using precoding weights for downlink measurement object signals and transmit the resulting signals to user terminals, and, in the user terminals, demodulate the downlink measurement object signals using the above precoding weights, and perform measurement processes based on these downlink measurement object signals.

In the following description, signals that are transmitted from a base station apparatus eNB and that need to be subjected to some measurement process in user terminals UE will be referred to as "downlink measurement object signals" or simply as "measurement object signals." These downlink measurement object signals include, for example, synchronization signals, broadcast signals, control signals, paging signals and so on, but are by no means limited to these. The downlink measurement object signals may include arbitrary signals that need to be subject to measurement processes in user terminals UE, and that are not precoded using precoding weights (hereinafter referred to simply as "weights").

The synchronization signals to constitute the downlink measurement object signals may include, for example, the PSS/SSS (Primary Synchronization Signal/Secondary Synchronization Signal). Also, the broadcast signals may include master information blocks (MIBs), system information blocks (SIBs) and so on. Furthermore, the control signals include the PDCCH (Physical Downlink Control Channel), the ePDCCH (enhanced PDCCH) and so on.

Now, an ePDCCH refers to a predetermined frequency band in the PDSCH (Physical Downlink Shared Channel) region (data signal region) that is used as a PDCCH region (control signal region). ePDCCHs that are allocated to the PDSCH region are demodulated using DM-RSs (Demodulation-Reference Signals). Note that an ePDCCH may be referred to as an "FDM-type PDCCH" or may be referred to as a "UE-PDCCH."

A first example of the present invention provides a communication system, in which precoding is applied to downlink measurement object signals using weights for downlink measurement object signals and transmitted from a base station apparatus eNB to user terminals UE, and in which, in the user terminals UE, the downlink measurement object signals are demodulated using the above weights, and measurement processes are performed based on these downlink measurement object signals.

With the first example, downlink measurement object signals are subjected to precoding using weights for downlink measurement object signals and transmitted from a base station apparatus eNB to user terminals UE. In the user terminals UE, demodulation is performed using the same weights for downlink measurement object signals, and measurement processes are performed based on the demodulated downlink measurement object signals. Consequently, precoding and demodulation of downlink measurement object signals can be executed using weights that are common between a base station apparatus eNB and user terminals UE, so that it is possible to adequately identify between downlink shared data channel signals and downlink measurement object signals. By this means, even in a communication environment where new communication schemes such as 3D MIMO/beam forming and massive-antenna MIMO/beam forming are adopted, it is possible to adequately transmit downlink measurement object signals including synchronization signals, broadcast signals and so on to user terminals UE. As a result of this, it is possible to optimize the true performance of communication systems employing these new communication schemes.

With the first example, the base station apparatus eNB can perform precoding of downlink measurement object signals using one weight or a plurality of weights that are determined in advance as weights for downlink measurement object signals. In this case, the weights to be used in precoding of downlink measurement object signals are determined in advance, so that it is possible to skip the process of generating weights, and, furthermore, reduce the occurrence of operations errors and so on due to wrong selection of weights.

Also, according to the first example, a base station apparatus eNB can select specific weights from one weight or a plurality of weights that are determined in advance, and perform precoding of downlink measurement object signals. For example, the base station apparatus eNB can switch between (1) the method of selecting weights that are common between specific user terminals UE, and (2) the method of selecting dedicated weights per user terminal UE. In the former case, weights that are common between specific user terminals UE are selected, so that it is possible to select weights that are suitable for the properties of the specific user terminals UE. Meanwhile, in the latter case, dedicated weights are selected on a per user terminal UE basis, so that it is possible to demodulate downlink measurement object signals in each user terminal UE with reliability.

In relationship to the above method of (1), as for the method of selecting specific user terminals UE, (1a) the method of selecting all user terminals UE as specific user terminals UE, or (1b) the method of selecting one user terminal UE or a plurality of user terminals UE that are grouped based on certain standards, as specific user terminals UE, may be possible. In the former case, the weights that are used are common between all the user terminals UE. Consequently, the control required for the selection of weights becomes unnecessary, and the number of weights to use in precoding can be reduced. Meanwhile, in the latter case, the weights that are used are common between the user terminals UE belonging to each group. Consequently, it is possible to select weights that are suitable to the properties (for example, locations) of user terminals UE belonging to each group.

Also, as for certain standards for grouping user terminals UE in the above method of (1b), for example, the method of grouping based on the locations of user terminals UE, or the method of grouping based on the types of antenna elements constituting the array antenna of the base station apparatus eNB may be possible. In the former case, for example, user terminals UE that are geographically close belong to the same group. Consequently, it is possible to select adequate weights for user terminals UE that are geographically close. Meanwhile, in the latter case, for example, user terminals UE that receive signals from common antenna elements belong to the same group. Consequently, it is possible to select optimal weights in the case that different weights are selected depending on the types of antenna elements when 3D MIMO/beam forming or massive-antenna MIMO/beam forming are adopted.

Note that the base station apparatus eNB can perform precoding for all the signals that are included in the downlink measurement object signals, using the same weights that are selected. Also, it is equally possible to pre-code only part of the signals included in the downlink measurement object signals using selected weights. For example, when the downlink measurement object signals are formed with a synchronization signal, a broadcast signal, a control signal and a paging signal, the base station apparatus eNB can pre-code only the synchronization signal and the broadcast signal using selected weights. By this means, it is possible to apply precoding to only specific measurement object signals using selected weights, so that it is possible to transmit only measurement object signals that are necessary, to user terminals UE, based on the premise that specific measurement object signals are shared between the base station apparatus eNB and the user terminals UE.

Also, the base station apparatus eNB may switch the weights selected by the above methods of (1) and (2), the specific user terminals UE selected by the above methods of (1a) and (1b), the groups selected by the above method of (1b) and so on, between time, frequency or space regions. For example, when using the method of (1) of selecting weights that are common between specific user terminals UE, it may be possible to select and switch between different weights between time regions. Also, for example, when using the method of (1b) of selecting one user terminal UE or a plurality of user terminals UE that are grouped based on certain standards as specific user terminals UE, it may be possible to select and switch between different specific user terminals UE between time, frequency or space regions.

Also, the base station apparatus eNB can also report information about the weights as of when the weight selection method is switched between the above methods of (1) and (2), the specific user terminals UE determined by the above methods of (1a) and (1b), and the groups selected by the above method of (1b) and so on, to user terminals UE. For example, these pieces of information can be reported using higher layer signaling signals (for example, RRC signaling). Also, it is equally possible to report these pieces of information using broadcast signals, downlink control channel signals (PDCCH) and so on. By reporting selected weights, selected specific user terminals UE and so on in this way, it is possible to share information that is necessary to demodulate measurement object signals with user terminals UE, with reliability.

Furthermore, when user terminals UE are grouped in the above method of (1b), it is possible to divide the user terminals UE into a predetermined number of groups. For example, it is possible to define ten groups in advance and divide user terminals UE into each group based on the locations of the user terminals UE. In this case, by letting the user terminals UE know in advance the weights to be used in each of the ten groups, it becomes unnecessary to report information about selected groups and so on from the base station apparatus eNB. By this means, although the load of measurement processes in the user terminals UE increases, it is still possible to reduce the amount of signaling from the base station apparatus eNB to the user terminals UE.

Meanwhile, with the first example, user terminals UE may hold weights for downlink measurement object signals in advance, or may have weights selected in and reported from the base station apparatus eNB. Then, in the course of communicating with the base station apparatus eNB, the user terminals UE demodulate the downlink measurement object signals using the above weights, and perform measurement processes based on these downlink measurement object signals. Furthermore, the user terminals UE can transmit (feed back) the measurement results to the base station apparatus eNB, depending on the types of the downlink measurement object signals.

When the above methods of (1) and (2) are selected in the base station apparatus eNB, user terminals UE can demodulate the downlink measurement object signals using weights that are determined in advance or weights that are reported by way of higher layer signaling and so on. In particular, when the above methods of (1a) and (2) are selected, it is preferable to demodulate the downlink measurement object signals in user terminals UE using weights that are determined in advance. This is because, in these cases, the load of measurement processes in user terminals UE is relatively low. On the other hand, when the above method of (1b) is selected, it is preferable to specify the downlink measurement object signals using weights that are reported by higher layer signaling and so on, in user terminals UE. This is because, in this case, the load of measurement processes in user terminals UE is relatively large.

Here, the measurement processes of downlink measurement object signals in user terminals UE will be described. In the measurement processes executed in user terminals UE, the process to be required varies depending on the types of downlink measurement object signals. In the following description, the content of the measurement processes in an LTE-A system will be described with reference to the steps of communication between user terminals UE and a base station apparatus eNB. Note that a case will be described here where the downlink measurement object signals are formed with a synchronization signal, a broadcast signal, a control signal and a paging signal.

In the LTE-A system, when a user terminal UE starts data channel/control channel transmission/reception with a base station apparatus eNB, the following steps take place.

### (1) Establishing synchronization

When the user terminal UE receives the synchronization signal from the base station apparatus eNB, the user terminal UE establishes synchronization with the base station apparatus eNB. With the first example, it is possible to perform precoding for the synchronization signal using weights that are selected in the base station apparatus eNB. In the user terminal UE, this synchronization signal is demodulated using weights that are determined in advance or weights that are reported through higher layer signaling and so on, and the measurement process is performed based on the demodulated synchronization signal, thereby establishing synchronization with the base station apparatus eNB. That is, the measurement process for the synchronization signal corresponds to the process of detecting the synchronization signal prior to establishing synchronization.

### (2) MEASUREMENTS

When the user terminal UE receives the broadcast signal from the base station apparatus eNB, the user terminal UE measures the received signal power from the base station apparatus eNB (MEASUREMENT). Similar to the case with the synchronization signal, the broadcast signal can be pre-coded using weights that are selected in the base station apparatus eNB. In the user terminal UE, this broadcast signal is demodulated using weights that are determined in advance or weights that are reported through higher layer signaling and so on, and the received signal power from the base station apparatus eNB is measured based on the demodulated broadcast signal. That is, the measurement process for the broadcast signal corresponds to the process of measuring the received signal power from the base station apparatus eNB based on the broadcast signal. Note that the user terminal UE measure received signal power with respect to a plurality of cells, and transmits (feeds back) the measurement results to the base station apparatus eNB as MEASUREMENT reports.

### (3) CSI feedback

The user terminal UE receives downlink reference signals (CSI-RSs) and measures channel quality, and feeds back CSI information (CQIs, PMIs and RIs) to the base station apparatus eNB.

### (4) Data signal/control signal transmission

The base station apparatus eNB allocates resources to the data signal/control signal to transmit to the user terminal UE based on the CSI information, and transmits the data signal/control signal to the user terminal UE. Similar to the synchronization signal and the broadcast signal, the control signal can be pre-coded with weights that are selected in the base station apparatus eNB. In the user terminal UE, this control signal is demodulated using weights that are determined in advance or weights that are reported through higher layer signaling and so on, and the measurement process is performed based on the demodulated control signal, thereby acquiring the control information included in the control signal. That is, the measurement process of the control signals equals the process of detecting the control signals prior to acquiring control information.

### (5) Paging signal transmission

When the network side takes the lead in setting up connections, the base station apparatus eNB transmits the paging signal (paging channel) to the user terminal UE. Similar to the synchronization signal and the broadcast signal, the paging signal can be pre-coded with weights that are selected in the base station apparatus eNB. In the user terminal UE, this paging signal is demodulated using weights that are determined in advance or weights that are reported through higher layer signaling and so on, and the measurement process is performed based on the demodulated paging signal, thereby acquiring the paging message included in the paging signal. That is, the measurement process of the paging signal equals the process of detecting the paging signal prior to acquiring the paging message.

In this way, according to the first example of the present invention, in each phase of communication steps, precoding and demodulation of downlink measurement object signals can be performed using weights that are common between a base station apparatus eNB and user terminals UE, so that it is possible to adequately identify between downlink shared data channel signals and downlink measurement object signals. By this means, even in a communication environment where new communication schemes such as 3D MIMO/beam forming and massive-antenna MIMO/beam forming are adopted, it is still possible to adequately transmit downlink measurement target signals including a synchronization signal, a broadcast signal and so on to user terminals UE. As a result of this, it becomes possible to optimize the true performance of communication systems employing these new communication schemes.

A second example of the present invention provides a communication system in which downlink measurement object signals are mapped to a frequency band that is different from the frequency band that is used to transmit downlink shared channel data, and transmitted from a base station apparatus eNB to user terminals UE, and in which, in the user terminals UE, the downlink measurement object signals are received in a frequency band that is different from the frequency band for downlink shared channel data, and measurement processes are performed based on these downlink measurement object signals. Note that, with the second example, too, the downlink measurement object signals include, for example, a synchronization signal, a broadcast signal, a control signal and a paging signal, but are by no means limited to these.

With the second example, downlink measurement object signals are mapped to a frequency band that is different from the frequency band that is used to transmit downlink shared channel data, and transmitted from a base station apparatus eNB to user terminals UE. In the user terminals UE, the downlink measurement object signals are received in a frequency band that is different from the frequency band for downlink shared channel data, and measurement processes are performed based on these downlink measurement object signals. Consequently, downlink measurement object signals can be communicated in a frequency band that is different from the frequency band for downlink shared channel data, so that it is possible to adequately identify between downlink shared data channel signals and downlink measurement object signals. By this means, even in a communication environment where new communication schemes such as 3D MIMO/beam forming and massive-antenna MIMO/beam forming are adopted, it is still possible to adequately transmit downlink measurement object signals including a synchronization signal, a broadcast signal and so on to user terminals UE. As a result of this, it becomes possible to optimize the true performance of communication systems employing these new communication schemes.

With the second example, the base station apparatus eNB uses a relatively low frequency band (for example, the 2 GHz band) as the frequency band to use to transmit downlink measurement object signals, and use a relatively high frequency band (for example, the 3.5 GHz band) as the frequency band to use to transmit downlink shared channel data. In this case, the base station apparatus eNB can transmit the downlink shared channel data by applying 3D MIMO/beam forming or massive-antenna MIMO/beam forming to the relatively high frequency band. Furthermore, for the relatively low frequency band, frequency bands that have been used in conventional LTE systems can be used.

Also, with the second example, the base station apparatus eNB can use predetermined frequency bands as the frequency band to use to transmit downlink measurement object signals and the frequency band to use to transmit downlink shared channel data. In this case, the frequency band for downlink measurement object signals and the frequency band for downlink shared channel data are determined in advance, so that it is possible adequately identify between downlink shared data channel signals and downlink measurement object signals in user terminals UE, with reliability.

Furthermore, with the second example, the base station apparatus eNB can select the frequency band to use to transmit downlink measurement object signals and the frequency band to use to transmit downlink shared channel data from predetermined frequency bands. In this case, the frequency band for downlink measurement target signals and the frequency band for downlink shared channel data are selected from predetermined frequency bands, so that it is possible to select a frequency band that is suitable for downlink measurement object signals, and transmit downlink measurement object signals to user terminals UE in an effective manner.

Note that, when the frequency band for downlink measurement object signals and the frequency band for downlink shared channel data are selected from predetermined frequency bands, the base station apparatus eNB may report the selected frequency bands to user terminals UE. For example, these pieces of information can be reported using higher layer signaling signals (for example, RRC signaling). Also, it is equally possible to report these pieces of information using broadcast signals, downlink control channel signals (PDCCH) and so on. By reporting the frequency band for downlink measurement object signals and the frequency band for downlink shared channel data selected in this way, it is possible to share information that is required in radio communication with user terminals UE, with reliability.

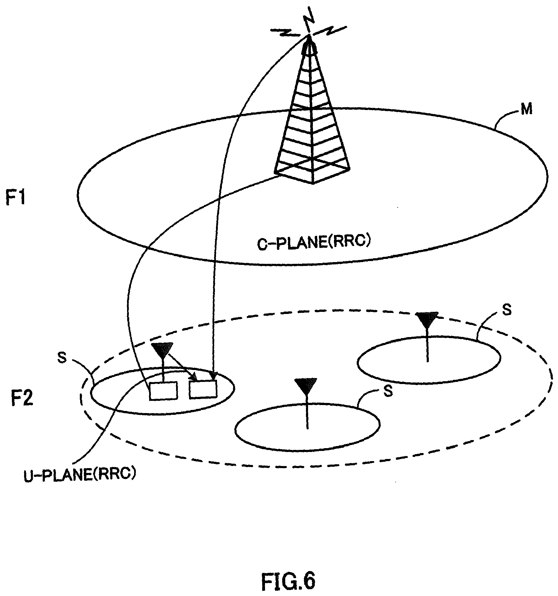

Now, the network configuration where the communication system according to the second example is applied will be described below. FIG. 6 is a diagram to show an example of a network configuration where the communication system according to the present invention is adopted. Note that FIG. 6 shows a case where the communication system according to the present invention is applied to a heterogeneous network (hereinafter referred to as "HetNet" when appropriate).

In the HetNet configuration shown in FIG. 6, the macro cell M and the small cells S are operated using different frequencies (F1 and F2). To operate the macro cell M and the small cells S with different frequencies (F1 and F2), carrier aggregation defined in LTE-A may be used. In Rel-10, carrier aggregation to group a plurality of component carriers (CCs) for broadbandization, where the system band of a conventional system (LTE) is one unit, is defined.

The HetNet configuration shown in FIG. 6 represents a concept to adopt a radio interface (NCT: New Carrier Type) that has no conventional concept of cell IDs and that is specially customized for user data transmission, in small cells S. Note that, although a new carrier (NCT) that is different from conventional carriers is used in the radio communication scheme for the small cells S, this new carrier may be referred to as an "additional carrier," or may be referred to as an "extension carrier."

In the HetNet configuration shown in FIG. 6, C (Control)-plane to transmit control signals and U (User)-plane to transmit user data are supported separately by the macro cell M and the small cells S. For example, C-plane, which the macro cell M supports, can be operated in the 2 GHz band, and U-plane, which the small cells S support, can be operated in the 3.5 GHz band.

According to the second example, in a communication system adopting this HetNet configuration, downlink measurement object signals are transmitted from the base station apparatus eNB of the macro cell M, while downlink shared channel data is transmitted from the base station apparatuses eNB of the small cells S by applying 3D MIMO/beam forming or massive-antenna MIMO/beam forming. By this means, it is possible to transmit downlink measurement object signals to user terminals UE in a frequency band that is different from the frequency band for downlink shared channel data, so that it is possible to adequately identify between downlink shared data channel signals and downlink measurement object signals in the user terminals UE. As a result of this, it is possible to maintain high connectivity against the mobility of the user terminals UE, and, by using a wide bandwidth, realize high-speed communication in which no interference is produced between the macro cell and the small cells.

In particular, with the second example, it is possible to map and transmit downlink shared channel data in a frequency band where new carrier type that is specially customized for user data transmission is applied, by employing 3D MIMO/beam forming or massive-antenna MIMO/beam forming. By this means, it is possible to transmit downlink shared channel data while effectively utilizing a new carrier type which provides no conventional control signal (for example, PDCCH) allocation region.

Although the first example and the second example of the present invention have been described separately in the above description, these may be configured in combinations. For example, it is possible to switch between control pertaining to the first example and control pertaining to the second example depending on changes in the communication environment, in a base station apparatus eNB. In this case, changes in the communication environment may relate to, for example, the number of user terminals UE to be the target of communication, the communication capabilities of user terminals UE to be the target of communication, and so on. In this way, by switching between control pertaining to the first example and control pertaining to the second example, it is possible to switch the transmission mode of downlink measurement object signals adequately. By this means, it is possible to transmit downlink measurement object signals to user terminals UE adequately, while flexibly coping with changes in the communication environment.

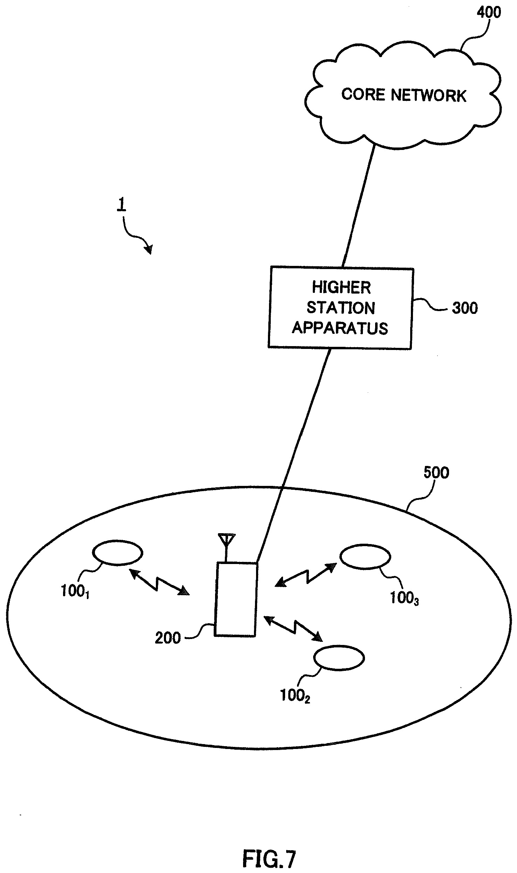

Next, a communication system 1, which has mobile station apparatuses 100 (hereinafter referred to as "mobile stations 100") to constitute user terminals UE and a base station apparatus 200 to constitute a base station apparatus eNodeB (hereinafter referred to as "base station 200") according to the present embodiment, will be described with reference to FIG. 7. FIG. 7 is a diagram to explain a configuration of the communication system 1 having mobile stations 100 and a base station 200 according to the present embodiment. Note that the communication system 1 shown in FIG. 7 is a system to accommodate, for example, the LTE system or SUPER 3G. Also, this mobile communication system 1 may be referred to as "IMT-Advanced" or may be referred to as "4G."

As shown in FIG. 7, the communication system 1 is formed to include a base station 200 and a plurality of mobile stations 100 (100₁, 100₂, 100₃, ... 100ₙ, where n is an integer to satisfy n>0) that communicate with this base station 200. The base station 200 is connected with a higher station apparatus 300, and this higher station apparatus 300 is connected with a core network 400. The mobile stations 100 communicate with the base station 200 in a cell 500. Note that the higher station apparatus may be, for example, an access gateway apparatus, a radio network controller (RNC), a mobility management entity (MME) and so on, but is by no means limited to these. In the communication system 1 according to the second example described earlier, a base station 200 constitutes a base station apparatus of a macro cell M or a small cell S.

The mobile stations (100₁, 100₂, 100₃, ... 100ₙ) have the same configurations, functions and states, and therefore will be hereinafter described as "mobile station 100," unless specified otherwise. Also, although, for ease of explanation, the mobile station 100 will be described to perform radio communication with the base station 200, more generally, user equipment (UE), which may include both mobile terminal apparatuses and fixed terminal apparatuses, may be used as well.

In the radio communication system 1, as radio access schemes, OFDMA (Orthogonal Frequency Division Multiple Access) is applied to the downlink, and SC-FDMA (Single-Carrier-Frequency-Division Multiple Access) is applied to the uplink. OFDMA is a multi-carrier transmission scheme to perform communication by dividing a frequency band into a plurality of narrow frequency bands (subcarriers) and mapping data to each subcarrier. SC-FDMA is a single carrier transmission scheme to reduce interference between terminals by dividing, per terminal, the system band into bands formed with one or continuous resource blocks, and allowing a plurality of terminals to use mutually different bands.

Now, communication channels in the LTE/LTE-A system will be described. On the downlink, the PDSCH, which is used by each mobile station 10 on a shared basis, and downlink L1/L2 control channels (PDCCH, PCFICH, PHICH), are used. User data -- that is, normal data signals -- is transmitted by means of this PDSCH. Transmission data is included in this user data. Note that the component carriers (CCs) and scheduling information allocated to the mobile station 100 in the radio base station 200 are reported to the mobile station 100 by means of the L1/L2 control channels.

On the uplink, the PUSCH, which is used by each mobile station 100 on a shared basis, and the PUCCH, which is an uplink control channel, are used. User data is transmitted by means of this PUSCH. Also, downlink radio quality information (CQI: Channel Quality Indicator) and so on are transmitted by the PUCCH.

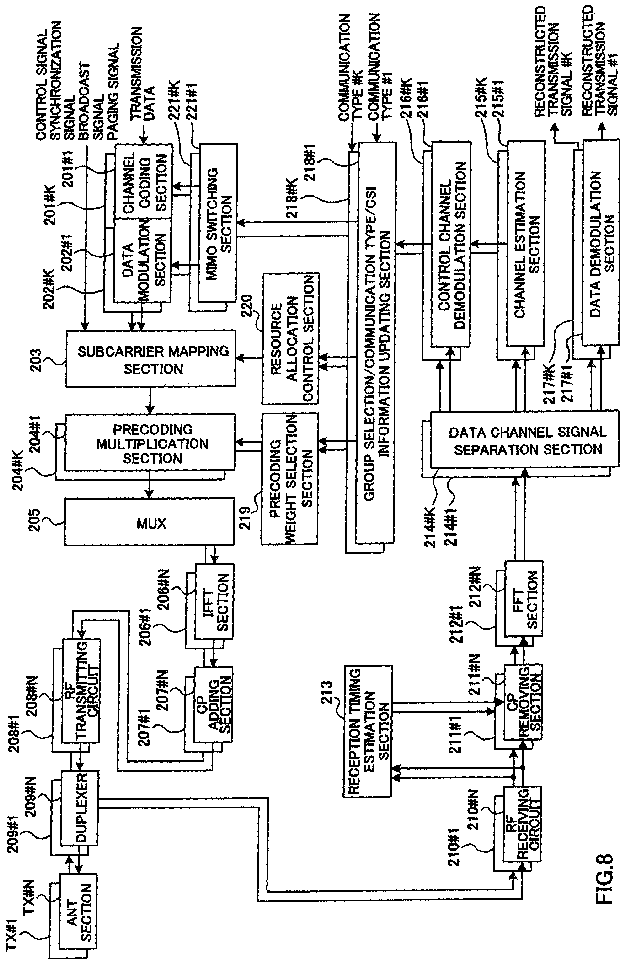

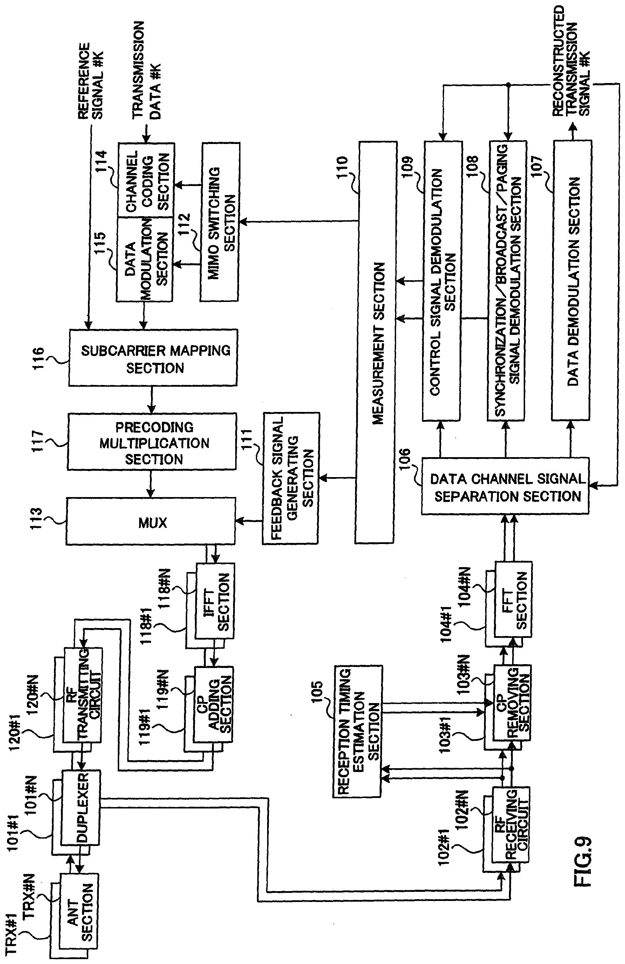

FIG. 8 is a block diagram showing a configuration of the base station 200 according to the present embodiment. FIG. 9 is a block diagram showing a configuration of the mobile station 100 according to the present embodiment. Note that, although the configurations of the base station 200 and the mobile station 100 shown in FIG. 8 and FIG. 9 are simplified to explain the present invention, assume that the configurations which a base station apparatus and a mobile station apparatus should normally have are provided.

In the base station 200 shown in FIG. 8, a scheduler, which is not shown, determines the number of users to multiplex (the number of users multiplexed) based on channel estimation values given from channel estimation sections 215 #1 to 215 #K, which will be described later. Then, the content of uplink and downlink resource allocation for each user (scheduling information) is determined, and transmission data #1 to #K for users #1 to #K are transmitted to corresponding channel coding sections 201 #1 to 201 #K.

Transmission data #1 to #K are subjected to channel coding in channel coding sections 201 #1 to 201 #K, and, after that, output to data modulation sections 202 #1 to 202 #K and subjected to data modulation. At this time, the channel coding and data modulation are carried out based on channel coding rates and modulation schemes given from MIMO switching sections 221 #1 to 221 #K, which will be described later. Transmission data #1 to #K, having been subjected to data modulation in data modulation sections 202 #1 to 202 #K, are converted from time sequence signals into frequency domain signals through a discrete Fourier transform in a discrete Fourier transform section, which is not shown, and output to a subcarrier mapping section 203.

The subcarrier mapping section 203 maps transmission data #1 to #K to subcarriers in accordance with resource allocation information that is given from a resource allocation control section 220, which will be described later. At this time, the subcarrier mapping section 203 maps control signals #1 to #K input from a control signal generating section, which is not shown, a synchronization signal input from a synchronization signal generating section, a broadcast signal input from a broadcast signal generating section, and a paging signal input from a paging signal generating section to subcarriers with transmission data #1 to #K (multiplexing). Transmission data #1 to #K, mapped to subcarriers in this way, are output to precoding multiplication sections 204 #1 to 204 #K.

For example, according to the above-described second example, the subcarrier mapping section 203 maps the control signals, synchronization signal, broadcast signal and paging signal constituting the downlink measurement object signals to subcarriers in the low frequency band (for example, the 2 GHz band) that operates in the macro cell M. Meanwhile, the subcarrier mapping section 203 maps transmission data #1 to #K to subcarriers in the high frequency band (for example, the 3.5 GHz band) that operates in the small cells S. That is, the subcarrier mapping section 203 constitutes a mapping processing section. In this case, the resource allocation control section 220 gives the resource allocation information allocated to the measurement object signals and the resource allocation information allocated to transmission data #1 to #K to the subcarrier mapping section 203.

Precoding multiplication sections 204 #1 to 204 #K apply a phase and/or amplitude shift to transmission data #1 to #K, for each of antennas TX #1 to TX #N, based on weights given from the precoding weight selection section 219, which will be described later (weighting of antenna TX #1 to antenna TX #N by means of precoding). Precoding multiplication sections 204 #1 to 204 #K can select the type of communication (from communication type 1 to communication type 3) depending on weights given from the precoding weight selection section 219, and also switch the vertical sectorization beams ON and OFF. Transmission data #1 to #K, to which a phase and/or amplitude shift has been applied in precoding multiplication sections 204 #1 to 204 #K, are output to a multiplexer (MUX) 205.

The multiplexer (MUX) 205 combines transmission data #1 to #K, to which a phase and/or amplitude shift has been applied, and generates transmission signals for each of transmitting antennas TX #1 to TX #N. The transmission signals generated in the multiplexer (MUX) 205 are converted from frequency domain signals to time domain signals through an inverse fast Fourier transform in inverse fast Fourier transform (IFFT) sections 206 #1 to 206 #N. Then, after CPs are added in cyclic prefix (CP) adding sections 207 #1 to 207 #N, the resulting signals are output to RF transmitting circuits 208 #1 to 208 #N. Then, after a frequency conversion process for conversion into a radio frequency band is carried out in RF transmitting circuits 208 #1 to 208 #N, the resulting signals are output to antennas TX #1 to TX #N via duplexers 209 #1 to 209 #N, and transmitted from antennas TX #1 to TX #N to the mobile station 100 on the downlink. Note that antennas TX #1 to TX #N are formed with, for example, the array antenna 10 shown in FIG. 1.

Meanwhile, transmission signals output from the mobile station 100 on the uplink are received in antennas TX #1 to TX #N, electrically separated into the transmitting route and the receiving route in duplexers 209 #1 to 209 #N, and, after that, output to RF receiving circuits 210 #1 to 210 #N. Then, in RF receiving circuits 210 #1 to 210 #N, the radio frequency signals are converted to baseband signals through frequency conversion. The baseband signals having been subjected to frequency conversion have the CPs removed in CP removing sections 211 #1 to 211 #N, and then output to fast Fourier transform sections (FFT sections) 212 #1 to 212 #N. A reception timing estimation section 213 estimates the timings of reception from the reference signals included in the received signals, and reports the estimation result to CP removing sections 211 #1 to 211 #N. FFT sections 212 #1 to 212 #N perform a Fourier transform of the received signals that are input, and convert the signals from time sequence signals to frequency domain signals. These received signals, having been converted into frequency domain signals, are output to data channel signal separation sections 214 #1 to 214 #K.

Data channel signal separation sections 214 #1 to 214 #K separate the received signals input from FFT sections 212 #1 to 212 #N by, for example, the minimum mean squared error (MMSE) and maximum likelihood detection (MLD) signal separation methods. By this means, the received signals that have arrived from the mobile station 100 are divided into received signals pertaining to user #1 to user #K. Channel estimation sections 215 #1 to 215 #K estimate channel states from the reference signals included in the received signals separated in data channel signal separation sections 214 #1 to 214 #K, and report the estimated channel states to control channel demodulation sections 216 #1 to 216 #K.

The received signals pertaining to user #1 to user #K separated in data channel signal separation sections 214 #1 to 214 #K are demapped and converted back to time sequence signals in a subcarrier demapping section, which is not shown, and then subjected to data demodulation in data demodulation sections 217 #1 to 217 #K. Then, the signals are subjected to channel decoding in channel decoding sections #1 to #K, which are not shown, and, by this means, transmission signal #1 to transmission signal #K are reconstructed.

Control channel demodulation sections 216 #1 to 216 #K demodulate the control channel signals (for example, the PUCCH) included in the received signals separated in data channel signal separation sections 214 #1 to 214 #K. At this time, in control channel demodulation sections 216 #1 to 216 #K, the control channel signals corresponding to user #1 to user #K respectively are demodulated, based on the channel states reported from channel estimation sections 215 #1 to 215 #K. The control channel signals demodulated in control channel demodulation sections 216 #1 to 216 #K are output to group selection/communication type/CSI information updating sections 218 #1 to 218 #K.

Group selection/communication type/CSI information updating sections 218 #1 to 218 #K extract the channel state information (CSI) included in each control channel signal (for example, the PUCCH) input from control channel demodulation sections 216 #1 to 216 #K, and always keeps the CSI updated in the latest state. For example, the CSI includes PMIs, RIs and CQIs. Also, group selection/communication type/CSI information updating sections 218 #1 to 218 #K hold communication type information for each mobile station 100, which is reported from the higher station apparatus 300, and always keeps the communication type information updated in the latest state. The communication type information is reported from the higher station apparatus 300, by, for example, higher control signals.

With the above-described first example, group selection/communication type/CSI information updating sections 218 #1 to 218 #K select the groups to which mobile stations 100 belong, according to the above method of (1b). For example, group selection/communication type/CSI information updating sections 218 #1 to 218 #K can select the groups to which mobile stations 100 belong based on the positions of the mobile stations 100, or select the groups to which mobile stations 100 belong based on the types of antenna elements constituting the array antenna 10 of the base station 200. Upon selecting groups, group selection/communication type/CSI information updating sections 218 #1 to 218 #K always hold information (group information) about the latest groups.

The group information, CSI and communication type information updated in group selection/communication type/CSI information updating sections 218 #1 to 218 #K are output to a precoding weight selection section 219, resource allocation control sections 220 and MIMO switching sections 221 #1 to 221 #K, respectively.

The precoding weight selection section 219 selects weights that represent the amounts of phase and/or amplitude shift to apply to transmission data #1 to #K, based on the group information, CSI and communication type information input from group selection/communication type/CSI information updating sections 218 #1 to 218 #K. The selected weights are output to precoding multiplication sections 204 #1 to 204 #K, and used to pre-code transmission data #1 to transmission data #K. These precoding weight selection section 219 and precoding multiplication sections 204 #1 to 204 #K constitute a precoding processing section.

For example, with the above-described first example, the precoding weight selection section 219 holds, in advance, one weight or a plurality of weights, by which downlink measurement object signals are multiplied. Also, the precoding weight selection section 219 can select weights that are common between specific mobile stations 100 from weights that are held in advance, or select dedicated weights per mobile station 100 (the above weight selection methods of (1) and (2)). Also, when determining specific mobile stations 100, the precoding weight selection section 219 can select all the mobile stations 100, or select one mobile station 100 or a plurality of mobile stations 100 that are grouped based on certain standards (the above UE selection methods of (1a) and (1b)). Furthermore, when grouping mobile stations 100 based on certain criteria, the precoding weight selection section 219 can perform the grouping based on the locations of the mobile stations 100, or perform the grouping based on the types of antenna elements constituting the array antenna of the base station 200.

Note that the information that is selected in group selection/communication type/CSI information updating sections 218 #1 to 218 #K and the precoding weight selection section 219 is included in transmission data as higher control information and transmitted to the mobile stations 100.

The resource allocation control section 220 determines the resource allocation information to allocate to each mobile station 100 based on the CSI and communication type information input from group selection/communication type/CSI information updating sections 218 #1 to 218 #K. The resource allocation information that is determined by the resource allocation control section 220 is output to the subcarrier mapping section 203 and used to map transmission data #1 to transmission data #K.

For example, with the above-described second example, the resource allocation control section 220 determines the resource allocation information for the subcarriers of the low frequency band (for example, the 2 GHz band) that operates in the macro cell M, as resource allocation information to allocate to measurement object signals. Meanwhile, the resource allocation control section 220 determines the resource allocation information for the subcarriers of the high frequency band (for example, the 3.5 GHz band) that operates in the small cells S, as resource allocation information to allocate to transmission data #1 to #K.

MIMO switching sections 221 #1 to 221 #K select the MIMO transmission schemes to use for transmission data #1 to transmission data #K based on the CSI and communication type information input from group selection/communication type/CSI information updating sections 218 #1 to 218 #K. For example, MIMO switching sections 221 #1 to 221 #K can select 2x2 MIMO transmission if communication type 1 is designated, or select 4x4 MIMO transmission if communication type 2 is designated. Then, MIMO switching sections 221 #1 to 221 #K determine channel coding rates and modulation schemes for transmission data #1 to transmission data #K in accordance with the MIMO transmission schemes that are selected. The determined channel coding rates are output to channel coding sections 201 #1 to 201 #K, and the determined modulation schemes are output to data modulation sections 202 #1 to 202 #K.

Meanwhile, in the mobile station 100 shown in FIG. 9, transmission signals that are output from the base station 200 are received in transmitting/receiving antennas TRX #1 to TRX #N, and after having been electrically separated into the transmitting route and the receiving route in duplexers 101 #1 to 101 #N, output to RF receiving circuits 102 #1 to 102 #N. Then, in RF receiving circuits 102 #1 to 102 #N, the signals are converted from radio frequency signals to baseband signals through frequency conversion. The baseband signals have the CPs removed in cyclic prefix (CP) removing sections 103 #1 to 103 #N, and, after that, output to fast Fourier transform sections (FFT sections) 104 #1 to 104 #N. The reception timing estimation section 105 estimates the timings of reception from the reference signals included in the received signals, and reports the estimation result to CP removing sections 103 #1 to 103 #N. FFT sections 104 #1 to 104 #N convert the received signals that are input, from time sequence signals to frequency domain signals by performing a Fourier transform. The received signals, having been converted into frequency domain signals, are output to the data channel signal separation section 106.

The data channel signal separation section 106 separates the received signals input from FFT sections 104 #1 to 104 #N by, for example, the minimum mean squared error (MMSE) and maximum likelihood detection (MLD) signal separation methods. By this means, received signals having arrived from the base station 200 are separated into received signals pertaining to user #1 to user #K, and the received signal pertaining to the user of the mobile station 100 (here, user #K) is extracted. The received signal pertaining to user #K, separated in the data channel signal separation section 106, is demapped and converted back to a time sequence signal in a subcarrier demapping section, which is not shown, and then demodulated in the data demodulation section 107. Then, this signal is subjected to channel decoding in a channel decoding section, which is not shown, and, by this means, transmission signal #K is reconstructed.

The synchronization/broadcast/paging signal demodulation section 108 demodulates the synchronization signal, broadcast signal and paging signal included in the received signal separated in the data channel signal separation section 106. Meanwhile, the control signal demodulation section 109 demodulates the control signal (for example, the PDCCH) included in the received signal separated in the data channel signal separation section 106. At this time, in the control signal demodulation section 109, the control signals pertaining to user #K are demodulated based on the channel state reported from a channel estimation section, which is not illustrated. The synchronization signal, broadcast signal and paging signal demodulated in the synchronization/broadcast/paging signal demodulation section 108, and each control signal demodulated in the control signal demodulation section 109 are output to a measurement section 110.

For example, with the above-described first example, the synchronization/broadcast/paging signal demodulation section 108 holds, in advance, one weight or a plurality of weights to multiply the synchronization signal, broadcast signal and paging signal constituting the downlink measurement object signals by. Meanwhile, the control signal demodulation section 109 holds, in advance, one weight or a plurality of weights to multiply the control signal s constituting the downlink measurement object signals by. The synchronization/broadcast/paging signal demodulation section 108 and the control signal demodulation section 109 demodulate the synchronization signal, broadcast signal, paging signal and control signals using these weights for the measurement object signals.

Also, with the above first example, when weights are reported from the base station 200, information (weights) that is reported by way of higher layer signaling signals is output to the synchronization/broadcast/paging signal demodulation section 108 and the control signal demodulation section 109. In this case, the synchronization/broadcast/paging signal demodulation section 108 and the control signal demodulation section 109 demodulate the synchronization signal, broadcast signal, paging signal and control signals using weights that are reported from the base station 200.

Also, for example, in the above-described second example, when the frequency band for measurement object signals or downlink shared data signals is reported from the base station 200, the information (the frequency band for measurement object signals or downlink shared data signals) that is reported by higher layer signaling signals in the data signal demodulated in the data demodulating section 107 is output to the data channel signal separation section 106. In this case, the data channel signal separation section 106 outputs the measurement object signals separated from the received signal to the synchronization/broadcast/paging signal demodulation section 108 and the control signal demodulation section 109, and meanwhile outputs the data signal separated from the received signal to the data demodulation section 107.

The measurement section 110 performs measurement processes with respect to the synchronization signal, broadcast signal and paging signal input from the synchronization/broadcast/paging signal demodulation section 108, or the control signals input from the control signal demodulation section 109. For example, the measurement section 110 establishes synchronization with the base station 200 by performing a measurement process based on the synchronization signal from the synchronization/broadcast/paging signal demodulation section 108. Also, the measurement section 110 acquires the paging message included in the paging signal by performing a measurement process based on the paging signal from the synchronization/broadcast/paging signal demodulation section 108. Furthermore, the measurement section 110 acquires the control information included in the control signals by performing measurement processes based on the control signals from the control signal demodulation section 109.

Also, the measurement section 110 measures the received power (for example, RSRP (Reference Signal Received Power)) from the base station 200 based on the broadcast signal from the synchronization/broadcast/paging signal demodulation section 108. Furthermore, the measurement section 110 measures channel quality (CQI) based on reference signals transmitted from the base station 200. Also, the measurement section 110 selects the PMI and RI based on the CQI that is measured. Then, the measurement section reports CSI (CQI, PMI and RI) or the RSRP to a feedback signal generating section 111 and a MIMO switching section 112.

The feedback signal generating section 111 generates a CSI feedback signal to feed back to the base station 200. In this case, the CSI feedback signal includes the CQI, PMI, RI and RSRP reported from the measurement section 110. The feedback signal (CSI feedback, RSRP feedback) generated in the feedback signal generating section 110 is output to a multiplexer (MUX) 113.

The MIMO switching section 112 selects the MIMO transmission scheme to use for transmission data #K based on the CQI, PMI and RI input from the measurement section 110. Then, the channel coding rate and modulation scheme for transmission data #K are determined in accordance with the selected MIMO transmission scheme. The determined channel coding rate is output to the channel coding section 114, and the determined modulation scheme is output to the data modulation section 115.

Transmission data #K related to user #K and transmitted from a higher layer is subjected to channel coding in the channel coding section 114, and then subjected to data modulation in the data modulation section 115. Transmission data #K having been subjected to data modulation in the data modulation section 115 is converted from a time sequence signal to a frequency domain signal in a serial-to-parallel conversion section, which is not shown, and output to a subcarrier mapping section 116.

In the subcarrier mapping section, transmission data #K is mapped to subcarriers in accordance with scheduling information that is designated from the base station 20. At this time, the subcarrier mapping section 116 maps (multiplexes) reference signal #K, generated in a reference signal generating section, which is not shown, to subcarriers, with transmission data #K. Transmission data #K mapped to subcarriers in this way is output to a precoding multiplication section 117.

The precoding multiplication section 117 applies a phase and/or amplitude shift to transmission data #K, for each of transmitting/receiving antennas TRX #1 to TRX #N. At this time, the precoding multiplication section 117 applies phase and/or amplitude shifts in accordance with weights that correspond to PMIs designated by the control signal demodulated in the control signal demodulation section 109. Transmission data #K, having been subjected to a phase and/or amplitude shift by the precoding multiplication section 117, is output to the multiplexer (MUX) 113.

The multiplexer (MUX) 113 combines transmission data #K, to which a phase and/or amplitude shift has been applied, and the control signals generated in the feedback signal generating section 111, and generates transmission signals for each of transmitting/receiving antennas TRX #1 to TRX #N.
The transmission signals generated in the multiplexer (MUX) 113 are converted from frequency domain signals to time domain signals in inverse fast Fourier transform sections (IFFT sections) 118 #1 to 118 #N through an inverse fast Fourier transform, and, after that, have CPs added thereto in CP adding sections 119 #1 to 119 #N, and output to RF transmitting circuits 120 #1 to 120 #N. Then, after a frequency conversion process for conversion into a radio frequency band is performed in RF transmitting circuits 120 #1 to 120 #N, the signals are output to transmitting/receiving antennas TRX #1 to TRX #N via duplexers 101 #1 to 101 #N, and transmitted from transmitting/receiving antennas TRX #1 to TRX #N to the base station 200 on the uplink.

The present invention is by no means limited to the above embodiment and can be implemented in various modifications. For example, it is possible to adequately change the number of carriers, the bandwidth of carriers, the signaling method, the number of processing sections, the order of processes and so on in the above description, without departing from the scope of the present invention, and implement the present invention. Besides, the present invention can be implemented with various changes, without departing from the scope of the present invention.

The disclosure of Japanese Patent Application No. 2012-168661, filed on July 30, 2012, including the specification, drawings and abstract, is incorporated herein by reference in its entirety.

The description further comprises the following numbered clauses:
1. A base station apparatus comprising:
   a precoding processing section configured to pre-code downlink measurement object signals using precoding weights for downlink measurement object signals; and
   a transmission section configured to transmit the downlink measurement object signals pre-coded in the precoding processing section.
2. The base station apparatus according to clause 1, wherein the precoding processing section pre-codes the downlink measurement object signals using one predetermined precoding weight or a plurality of predetermined precoding weights.
3. The base station apparatus according to clause 2, wherein the precoding processing section selects precoding weights that are common between specific user terminals from the one predetermined precoding weight or the plurality of predetermined precoding weights, and pre-codes the downlink measurement object signals for the specific user terminals using the selected precoding weights.
4. The base station apparatus according to clause 3, wherein the precoding processing section selects precoding weights that are common between all user terminals as the specific user terminals.
5. The base station apparatus according to clause 3, wherein the precoding processing section selects precoding weights that are common between one user terminal or a plurality of user terminals that are grouped based on certain standards as the specific user terminals.
6. The base station apparatus according to clause 5, wherein the precoding processing section performs the grouping based on locations of the user terminals.
7. The base station apparatus according to clause 5, wherein the precoding processing section performs the grouping based on types of antenna elements constituting an antenna apparatus that is provided in the base station apparatus.
8. The base station apparatus according to clause 5, wherein the precoding processing section performs the grouping into a number of groups determined in advance based on certain standards.
9. The base station apparatus according to clause 3, wherein the precoding weights selected in the precoding processing section are reported to the specific user terminals.
10. The base station apparatus according to clause 2, wherein the precoding processing section selects precoding weights that are specific to each user terminal from the one predetermined precoding weight or the plurality of predetermined precoding weights, and pre-codes the downlink measurement object signals corresponding to the user terminals using the selected precoding weights.
11. A base station apparatus comprising:
   a mapping processing section configured to map downlink measurement object signals to a frequency band that is different from a frequency band that is used to transmit downlink shared channel data; and
   a transmission section configured to transmit the downlink measurement object signals in the frequency band where the downlink measurement object signals are mapped in the mapping processing section.
12. The base station apparatus according to clause 11, wherein the mapping processing section maps the downlink shared channel data to a relatively high frequency band and maps the downlink measurement object signals to a relatively low frequency band.
13. The base station apparatus according to clause 11, wherein the mapping processing section maps the downlink shared channel data to a frequency band where a new carrier type that is specially customized for user data transmission is applied.
14. The base station according to one of clause 1 to clause 13, wherein the downlink measurement object signals include at least one of a synchronization signal, a broadcast signal, a paging signal and a control signal.
15. A user terminal comprising:
   a demodulation section configured to demodulate downlink measurement object signals using precoding weights for downlink measurement object signals; and
   a measurement section configured to perform measurement processes based on the demodulated downlink measurement object signals.
16. The user terminal according to clause 15, wherein the demodulation section demodulates the downlink measurement object signals using one predetermined precoding weight or a plurality of predetermined precoding weights.
17. The user terminal according to clause 15, wherein the demodulation section demodulates the downlink measurement object signals using precoding weights that are common between specific user terminals and that are selected from one predetermined precoding weight or a plurality of predetermined precoding weights.
18. The user terminal according to clause 17, wherein the demodulation section demodulates the downlink measurement object signals using precoding weights that are common between the specific user terminals and that are reported from a base station apparatus.
19. A user terminal comprising:
   a receiving section configured to receive downlink measurement object signals in a frequency band that is different from a frequency band that is used to transmit downlink shared channel data; and
   a measurement section configured to perform measurement processes based on the downlink measurement object signals received in the receiving section.
20. A communication system comprising:
   a base station apparatus comprising:
      a precoding processing section configured to pre-code downlink measurement object signals using precoding weights for downlink measurement object signals; and
      a transmission section configured to transmit the downlink measurement object signals pre-coded in the precoding processing section; and
   a user terminal comprising:
      a demodulation section configured to demodulate the downlink measurement object signals using the precoding weights; and
      a measurement section configured to perform measurement processes based on the demodulated downlink measurement object signals.
21. A communication system comprising:
   a base station apparatus comprising:
      a mapping processing section configured to map downlink measurement object signals to a frequency band that is different from a frequency band that is used to transmit downlink shared channel data; and
      a transmission section configured to transmit the downlink measurement object signals in the frequency band where the downlink measurement object signals are mapped in the mapping processing section; and
   a user terminal comprising:
      a receiving section configured to receive the downlink measurement object signals in the frequency band that is different from the frequency band that is used to transmit the downlink shared channel data; and
      a measurement section configured to perform measurement processes based on the downlink measurement object signals received in the receiving section.
22. A communication control method comprising the steps of:
   in a base station apparatus:
      pre-coding downlink measurement object signals using precoding weights for downlink measurement object signals; and
      transmitting the pre-coded downlink measurement object signals; and
   in a user terminal:
      demodulating the downlink measurement object signals using the precoding weights; and
      performing measurement processes based on the demodulated downlink measurement object signals.
23. A communication control method comprising the steps of:
   in a base station apparatus:
      mapping downlink measurement object signals to a frequency band that is different from a frequency band that is used to transmit downlink shared channel data; and
      transmitting the downlink measurement object signals in the frequency band where the downlink measurement object signals are mapped; and
   in a user terminal:
      receiving the downlink measurement object signals in the frequency band that is different from the frequency band that is used to transmit the downlink shared channel data; and
      performing measurement processes based on the downlink measurement object signals received.

## Claims

1. A base station apparatus comprising:
a precoding processing section configured to pre-code a broadcast signal and/or a paging signal using a given precoding weight; and
a transmission section configured to transmit the pre-coded broadcast signal and/or paging signal.

2. The base station apparatus according to claim 1, wherein the precoding processing section pre-codes the broadcast signal and/or paging signal using one predetermined precoding weight or a plurality of predetermined precoding weights.

3. The base station apparatus according to claim 2, wherein the precoding processing section selects a precoding weight that is common between specific user terminals from the one predetermined precoding weight or the plurality of predetermined precoding weights, and pre-codes the broadcast signal and/or paging signal for the specific user terminals using the selected precoding weight.

4. The base station apparatus according to claim 3, wherein the precoding processing section selects all user terminals as the specific user terminals.

5. The base station apparatus according to claim 3, wherein the precoding processing section selects a plurality of user terminals that are grouped based on certain standards as the specific user terminals.

6. The base station apparatus according to claim 5, wherein the precoding processing section performs the grouping based on locations of the user terminals.

7. The base station apparatus according to claim 5, wherein the precoding processing section performs the grouping based on types of antenna elements constituting an antenna apparatus that is provided in the base station apparatus.

8. The base station apparatus according to claim 5, wherein the precoding processing section performs the grouping into a number of groups determined in advance based on certain standards.

9. The base station apparatus according to claim 3, wherein the transmission section transmits the precoding weight selected in the precoding processing section to the specific user terminals.

10. The base station apparatus according to claim 2, wherein the precoding processing section selects a precoding weight that is specific to each user terminal from the one predetermined precoding weight or the plurality of predetermined precoding weights, and pre-codes the broadcast signal and/or paging signal corresponding to the user terminals using the selected precoding weight.

11. The base station apparatus according to claim 1, wherein the precoding processing section pre-codes at least two of a synchronization signal, the broadcast signal, a control signal and the paging signal by using a same precoding weight.

12. A user terminal comprising:
a demodulation section configured to demodulate a broadcast signal and/or a paging signal using a given precoding weight; and
a measurement section configured to perform measurement processes based on the broadcast signal and/or paging signal.

13. The user terminal according to claim 12, wherein the demodulation section demodulates the broadcast signal and/or paging signal using one predetermined precoding weight or a plurality of predetermined precoding weights.

14. The user terminal according to claim 12, wherein the demodulation section demodulates the broadcast signal and/or paging signal using a precoding weight that is common between specific user terminals and that is selected from one predetermined precoding weight or a plurality of predetermined precoding weights.

15. The user terminal according to claim 14, wherein the demodulation section demodulates the broadcast signal and/or paging signal using a precoding weight that is common between the specific user terminals and that is reported from a base station apparatus.

16. The user terminal according to claim 12, wherein the demodulation section demodulates at least two of a pre-coded synchronization signal, the broadcast signal, a pre-coded control signal and the paging signal by using a same precoding weight.

17. A communication system comprising:
a base station apparatus comprising: a precoding processing section configured to pre-code a broadcast signal and/or a paging signal using a given precoding weight; and a transmission section configured to transmit the pre-coded broadcast signal and/or paging signal; and
a user terminal comprising: a demodulation section configured to demodulate the broadcast signal and/or paging signal using the precoding weight; and a measurement section configured to perform measurement processes based on the broadcast signal and/or paging signal.

18. The communication system according to claim 17, wherein the demodulation section demodulates at least two of a pre-coded synchronization signal, the broadcast signal, a pre-coded control signal and the paging signal by using a same precoding weight.

19. A communication control method for a user terminal, comprising the steps of:
demodulating a broadcast signal and/or a paging signal using a given precoding weight; and
performing measurement processes based on the broadcast signal and/or paging signal.

20. The communication control method according to claim 19, wherein at least two of a pre-coded synchronization signal, the broadcast signal, a pre-coded control signal and the paging signal are demodulated by using a same precoding weight.
